# EUROPEAN PATENT APPLICATION

(11) **EP 4 818 654 A2**
(43) Date of publication of application: **07.10.2026**
(21) Application number: 26191780.1
(22) Date of filing: 05.11.2021
(51) Int. Cl.: G01J 3/46

(54) **METHOD AND DEVICE FOR INVESTIGATING VISUAL PROPERTIES OF A SAMPLE SURFACE HAVING DEFECTS**

(62) Document number(s) of the earlier application(s) in accordance with Art. 76 EPC: 21206794.6 / 4 177 594
(71) Applicant: X-RITE EUROPE GMBH, 8105 Regensdorf (CH)
(72) Inventor: DENOTH, Schimun, 8105 Regensdorf (CH); MÜLLER, Gero, 8105 Regensdorf (CH); GLOOR, Michael, 8105 Regensdorf (CH); ADBY, Matthew, 8105 Regensdorf (CH)
(74) Representative: Detken, Andreas

(57) **Abstract**

A method for investigating visual properties of a sample surface using a spectrophotometer having an integrated camera comprises acquiring at least one image (501) of a measurement area of the sample surface for at least one measurement geometry, using the integrated camera of the spectrophotometer, and determining a defect indicator that is indicative of defects of the sample surface in the measurement area (509). The step of determining a defect indicator comprises analyzing pixel values of the at least one image (502-508), using at least one processor.

## Description

### TECHNICAL FIELD

The present invention relates to a method for investigating the visual appearance of a sample surface using a multi-angle spectrophotometer, the method being specifically adapted to the detection of defects of the sample surface, and to a multi-angle spectrophotometer that is configured to carry out the method.

### PRIOR ART

In the car refinish business, multi-angle spectrophotometers are used in combination with color formulation software to efficiently find a paint recipe that achieves a good color match with an intact vehicle part. The spectrophotometer is used to determine appearance attributes of the paint coating of the intact vehicle part, in particular, color attributes and possibly texture attributes. The formulation software receives these appearance attributes and proposes a matching paint recipe.

In such a procedure, it is essential that the measurement of the appearance attributes with the multi-angle spectrophotometer is carried out on a portion of the intact vehicle part that has a few defects as possible. Possible defects include scratches, holes and air pockets. Unfortunately, certain defects like micro scratches cannot be easily recognized by the naked eye and are therefore often missed when operators make a measurement. Such defects negatively influence the measurement results and can cause the spectrophotometer to output appearance attributes that do not correspond to the true appearance of the intact vehicle part. As a result, the paint recipe that is provided by the formulation software may lead to a visible color gap to the existing paint coating. This may cause costly and time-consuming repetitions of the coating process until a satisfactory match is achieved.

Some modern hand-held multi-angle spectrophotometers have an integrated camera and an integrated color display, making it possible to acquire and display a magnified preview image of a measurement area on the intact vehicle part. By observing the preview image, an operator may be able to recognize defects before a measurement is carried out. However, operators are not always well trained and might be under time pressure to get the job done. Furthermore, the integrated displays in hand-held spectrophotometers are usually rather small and not of the highest quality, resulting in limited contrast and brightness. This makes it difficult to recognize defects in the preview images, especially under difficult lighting conditions, e.g., in bright sunlight on a parking lot. For these and other reasons, defects can go unnoticed.

WO2021094496A1 discloses a method for identification of effect pigments, wherein digital images of a target coating are obtained, and a pre-analysis of the digital images is performed for identifying defects, such as scratches.

US2014152990A1 discloses a hand-held appearance investigation device that combines spectral and imaging pick-up.

### SUMMARY OF THE INVENTION

It is an object of the present invention to provide a method for investigating the visual appearance of a sample surface, in particular, for measuring appearance attributes such as color and/or texture attributes of the sample surface, the method taking into account that the sample surface may have portions that contain defects like scratches, holes or air pockets, in particular, helping to prevent portions with defects from being measured and/or enabling a correction of the influences of defects.

This object is achieved by a method having the features of claim 1. Further embodiments of the invention are laid down in the dependent claims.

Accordingly, a method for investigating visual appearance of a sample surface using a spectrophotometer having an integrated camera is provided. The method comprises:
acquiring at least one image of a measurement area of the sample surface for at least one measurement geometry, using the integrated camera of the spectrophotometer; and
determining a defect indicator that is indicative of defects of the sample surface in the measurement area, the step of determining a defect indicator comprising analyzing pixel values of the at least one image, using at least one processor.

According to the present invention, defect detection is carried out using one or more images that have been acquired by the integrated camera of the spectrophotometer. In the prior art, such images have been normally used either for preview purposes or for determining texture attributes. The present invention suggests using these images for an additional purpose, namely for the detection of defects in the measurement area of the sample surface. In this manner, an automatic determination can be made if the measurement area of the sample surface is actually suitable for determining appearance attributes, and/or a quality indicator can be derived that indicates reliability of the determined appearance attributes.

Unlike visual inspection, the presently proposed method uses a computer processor for determining the defect indicator. Determination of the defect indicator involves the analysis of pixel values of pixels in the image. Pixel values may be raw values (e.g., RGB values) obtained from the camera, or they may be processed values that have been derived from these raw values, for instance, color values in a device-independent color space such as CIEXYZ or CIELAB. Preferably, the pixel values for each pixel include at least one brightness value that is indicative of the brightness of the pixel. By carrying out an objective, pixel-based analysis, a much more reliable detection of defects can be achieved than by simple visual inspection either of the sample surface itself or of a preview image of the measurement spot.

The measurement geometry under which the image is acquired is preferably a specular or near-specular measurement geometry. To this end, the spectrophotometer preferably comprises a directional light source. The term "near-specular measurement geometry" is to be understood as relating to a geometry in which the integrated camera is arranged such that light that has been emitted from the light source and reflected from the measurement area at a direction that differs by no more than 25°, preferably no more than 15° from the specular direction is received by the camera. To this end, the beam paths of the light emitted from the light source and of the light received by the integrated camera are preferably coplanar and essentially symmetric to a device normal of the spectrophotometer that passes through the measurement area, or the arrangement of the beam paths differs from such a symmetric arrangement by no more than 25°, preferably no more than 15°. Examples include illumination at 15° to the device normal and specular detection at -15° to the device normal, illumination at 45° and specular detection at -45° to the device normal, illumination at 15° to the device normal and aspecular detection at 0° or -30° to the device normal (these geometries being commonly called "r15as15" and "r15as-15", respectively), or illumination at 45° to the device normal and aspecular detection at -30° or -60° to the device normal (these geometries being commonly called "r45as15" and "r45as-15", respectively).

In preferred embodiments, the entire step of determining a defect indicator is carried out by at least one processor of the spectrophotometer itself. In other embodiments, at least part of this step may be carried out by an external computer to which image-related data have been transmitted. The latter approach may in particular be advantageous if a complex algorithm with a high demand of processor power or computer memory is employed for determining the defect indicator, for instance, a machine learning algorithm.

In preferred embodiments, the step of determining a defect indicator is carried out in real time during use of the spectrophotometer. In this manner, the defect indicator can be used to control operation of the spectrophotometer before, during or after acquisition of the appearance attributes. In particular, the method may include generating at least one control instruction that causes the spectrophotometer to carry out an action, the control instruction being dependent on the defect indicator.

The method may include outputting instructions to an operator to move the spectrophotometer to a different location on the sample surface if the defect indicator indicates that the sample surface has unacceptable defects in the measurement area. The method may further include detecting whether the spectrophotometer has been moved to a different location, based on at least one of the following:
- a comparison of images acquired by the integrated camera before and after outputting the instructions to the operator; and/or
- signals from at least one motion sensor that is integrated into the spectrophotometer.

The instructions may include an indication of a direction into which the spectrophotometer should be moved. This indication may be based on one or more images of a portion of the sample surface outside the measurement area, which have been acquired with the integrated camera. For instance, in one embodiment, the integrated camera may acquire an image that contains the measurement area, but is larger than the measurement area. Analysis of the pixel values in the image may then be carried out not only for the image portion that contains the measurement area, but also for image portions outside the measurement area. If the analysis of the portions outside the measurement area shows that an area of the sample surface is free of defects, the instructions may include an indication to move the spectrophotometer in such a manner that the defect-free area will constitute the measurement area after the spectrophotometer has been moved. In another embodiment, multiple images might be taken while the spectrophotometer is moved across the sample surface, and these multiple images might be analyzed.

The method may further comprise measuring appearance attributes of the sample surface in the measurement area, using the spectrophotometer, in particular, using at least one spectrally resolving detector and/or the integrated camera of the spectrophotometer.

In particular, the method may include automatically initiating the measurement of appearance attributes if the defect indicator indicates that the sample surface does not have unacceptable defects in the measurement area.

The method may further comprise correcting the measured appearance attributes for the defects. In particular, the spectrophotometer may include at least one spectrally resolving detector for obtaining spectral information from the measurement area, and correction may involve a correction of said spectral information. For instance, color values in a suitable color space may be determined from the spectral information, and the color values may be corrected for the effect of the defects. In particular, the color space may have a brightness dimension, and a color value for the brightness dimension (brightness value) may be corrected. If appearance attributes are derived using image data acquired by the integrated camera, analysis of the image data may exclude defect regions that have been identified as containing defects.

The method may include detecting whether the spectrophotometer has been moved after the image of the measurement area was acquired, based on signals from at least one motion sensor that is integrated into the spectrophotometer, to ensure that the measurement of the appearance attributes is actually carried out for the same measurement area for which the defect detection was carried out. The method may further include automatically initiating the measurement of appearance attributes only if the spectrophotometer has not been moved for a predetermined period of time, to ensure that the spectrophotometer has assumed a stable position relative to the sample surface before the measurement is started. This may be useful, in particular, if measurements are carried out on objects where it is difficult to hold the spectrophotometer in a stable position relative to the object.

The method may involve obtaining multiple images of the measurement area for a plurality of measurement geometries. The step of determining a defect indicator may then comprise analyzing pixel values of said multiple images. The images may be analyzed one by one, or they may be analyzed together, e.g., for taking into account features that are common to the images of all measurement geometries.

In some cases, it may be desirable to split the step of determining a defect indicator into two portions, namely, a pre-measurement portion and a post-measurement portion. The pre-measurement portion may then comprise analyzing pixel values of only one image or only a few images of the measurement area for a first number of measurement geometries, this number being 1 or a rather small number, to derive a pre-measurement defect indicator. The pre-measurement portion may be carried out in real time before a measurement of visual appearance of the sample surface in the measurement area has been completed, and may be used to control subsequent operation of the spectrophotometer. In contrast, the post-measurement portion may comprise analyzing pixel values of a plurality of images of the measurement area for a second number of measurement geometries to derive a post-measurement defect indicator, wherein the second number of measurement geometries is larger than the first number of measurement geometries. The post-measurement portion may be carried out later than the pre-measurement portion. In particular, it may be carried out after the measurement of visual appearance of the sample surface in the measurement area has been completed. The post-measurement defect indicator may be used to assign a quality indicator to the measured appearance attributes.

The pre-measurement portion is advantageously carried out by a processor in the spectrophotometer. In some embodiments, at least a portion of the post-measurement portion may be carried out by a computer that is separate from the spectrophotometer.

In a particularly simple and efficient embodiment, the step of determining a defect indicator may comprise the following substeps a)-c):
a) dividing the image into a plurality of image patches, each image patch comprising an array of pixels;
b) for each image patch, determining whether the image patch is a defect patch that comprises a defect; and
c) deriving the defect indicator based on a number of defect patches in the image.

Step b) may in particular comprise the following substeps:
i) for each pixel in the image patch, determining whether the pixel has a pixel value (in particular, a brightness value indicative of a brightness of the pixel) that deviates from a target range of pixel values (in particular, exceeds a brightness threshold);
ii) if the pixel value is outside the target range (in particular, above the brightness threshold), tagging the pixel as a defect pixel;
iii) for each given defect pixel in the image patch, determining an individual neighborhood count, the individual neighborhood count indicating a number of neighboring defect pixels in a neighborhood of the given defect pixel;
iv) determining a total number of defect pixels in the image patch and a total neighborhood count, the total neighborhood count being the sum of the individual neighborhood counts of all defect pixels in the image patch;
v) calculating a ratio of the total neighborhood count and the total number of defect pixels;
vi) if the ratio exceeds a defect threshold, tagging the image patch as a defect patch;

However, another algorithm may be employed, and the defect indicator may be more complex than just a simple indication of the number of defect patches.

The present invention also provides a multi-angle spectrophotometer, comprising:
at least one light source for illuminating a measurement area of a sample surface, preferably at least two light sources at different illumination angles relative to the measurement area;
a camera configured to obtain images of the measurement area;
at least one spectrally resolving detector for obtaining spectral information from the measurement area;
at least one processor; and
a memory storing computer-readable instructions to cause the processor to carry out the above-described method.

As discussed above, preferably at least one of the light sources is a directional light source, and the directional light source and the camera are arranged in a specular or near-specular geometry.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a perspective view of an exemplary multi-angle spectrophotometer according to the prior art;
- Fig. 2: shows a perspective view of a measurement array of the multi-angle spectrophotometer in Fig. 2;
- Fig. 3: shows a schematic hardware-oriented illustration of electronic circuitry in the multi-angle spectrophotometer of Fig. 1;
- Fig. 4: shows a schematic illustration of an image patch; and
- Fig. 5: shows a flow diagram illustrating a method for investigating visual properties of a sample.

### DESCRIPTION OF PREFERRED EMBODIMENTS

### Exemplary appearance capture device

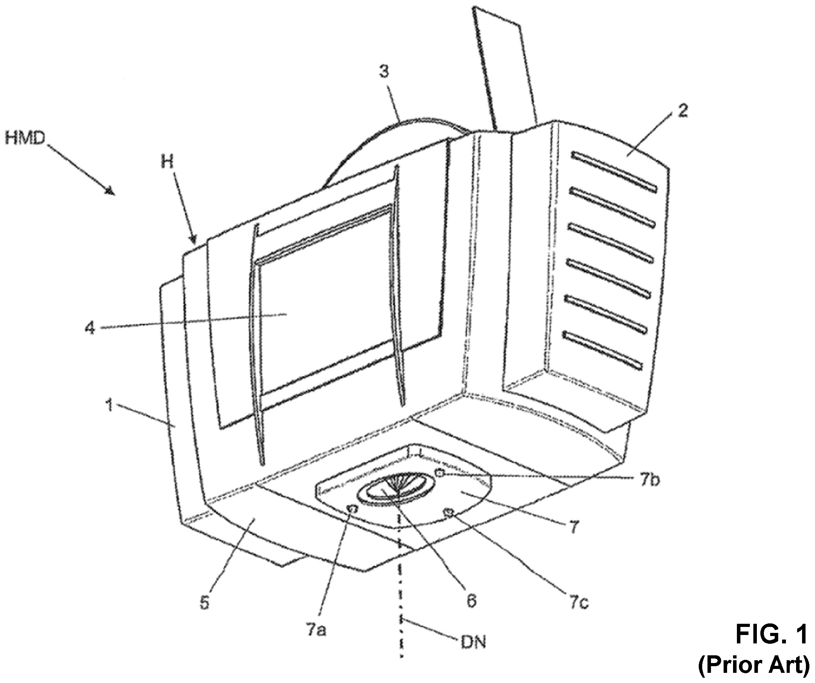

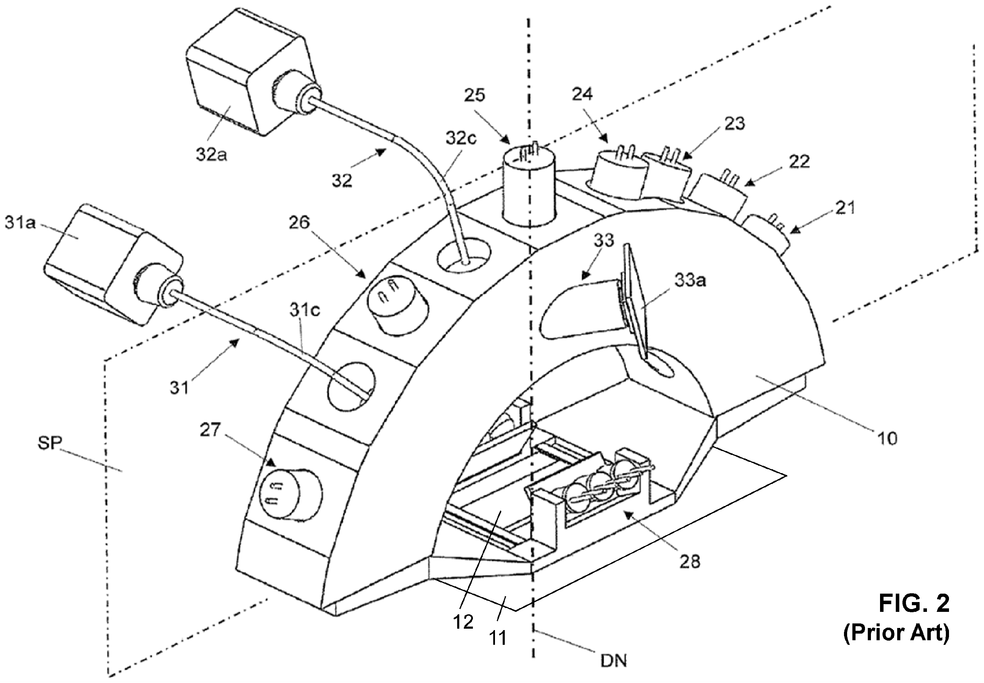

An exemplary hand-held multi-angle spectrophotometer that may be used in conjunction with the present invention is illustrated in Figs. 1 and 2. The multi-angle spectrophotometer of Figs. 1 and 2 is described in greater detail in document US20140152990A1, the contents of which are incorporated herein in their entirety by reference for teaching a hand-held multi-angle spectrophotometer having imaging capabilities. However, the present invention is not limited to any particular type of spectrophotometer, and any spectrophotometer that includes at least one image detector may be used.

The multi-angle spectrophotometer that is illustrated Figs. 1 and 2 is configured for capturing the appearance of a surface of a measurement object, in the following referred to as the "sample surface". In the following, the multi-angle spectrophotometer of Figs. 1 and 2 will therefore be referred to more generally as an "appearance capture device". In the following, the term "measurement array" is understood to mean the sum of the components of the appearance capture device which serve to illuminate a measurement area on the sample surface, to capture light reflected from this measurement area and to convert it into corresponding electrical signals. The term "device normal" is understood to mean an imaginary straight line which is fixed relative to the appearance capture device, extends essentially through the center point of a measurement opening of the device and is perpendicular to the sample surface when the appearance capture device is positioned on a planar sample surface. The plane of the measurement opening usually lies parallel to the sample surface, such that the device normal is also perpendicular to the measurement opening. The term "vertical" is understood to mean the direction of the device normal. Accordingly, "vertical sections" are to be understood to mean planar sections in a plane that contains the device normal or is parallel to the device normal. In the following description of the appearance capture device, directions and/or angles are relative to the device normal, which is spatially fixed with respect to the appearance capture device.

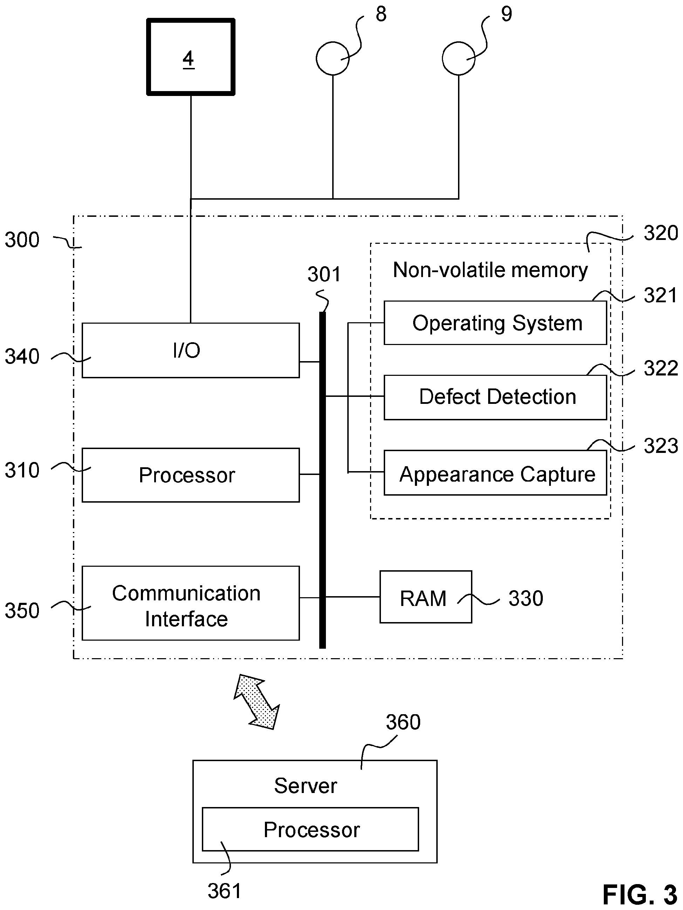

The hand-held appearance capture device shown in Fig. 1 is indicated as a whole by the reference sign HMD. It comprises a housing H which accommodates a measurement array, illustrated in Fig. 2, and electronic circuitry, schematically illustrated in Fig. 3, which controls the measurement array. Two gripping parts 1 and 2 are embodied laterally on the housing H. A wrist strap 3 is arranged on the upper side of the housing H. A display 4 is provided on the front side of the housing H. Operating members (not shown) are arranged on the upper side of the housing H.

The lower side of the housing H comprises a housing base 5 reinforced by a base plate 7, which is provided with a measurement opening 6. The housing base 5 comprises an aperture (not indicated by a reference sign) in the region of the measurement opening 6, such that light can exit the interior of the housing through the aperture and the measurement opening 6 and, conversely, light from outside can enter the interior of the housing through the measurement opening 6 and the aperture. Three support members 7a , 7b and 7c are arranged around the measurement opening 6 on the base plate 7 and help in enabling the measurement device to be correctly positioned even on curved measurement surfaces, such that the device normal completely or at least largely coincides with the normal of the measurement surface in the center point of the measurement area.

The device normal is indicated in Fig. 1 by the reference sign DN. It is perpendicular to the base plate 7 and extends through the center point of the measurement opening 6.

The setup of the measurement array is illustrated in Fig. 2. It comprises an arc body 10 which is fixedly held in the housing H and in which optical and/or photoelectric components of the measurement array are arranged. In the exemplary embodiment shown, these components comprise seven directional illumination means 21, 22, 23, 24, 25, 26, and 27, and three pick-up means 31, 32, and 33 . Additionally, a diffusely illuminating illumination means 28 is also provided in the immediate vicinity of the measurement opening 6 .

The seven directional illumination means 21 to 27 illuminate a measurement area 12 on a sample surface 11 of a measurement object along different illumination directions in relation to the device normal DN. For instance, the optical axes of the directional illumination means 21 to 27 may be oriented at angles of -60°, -45°, -30°, -20°, 0°, +30° and +65° relative to the device normal. All seven directional illumination means 21 to 27 are arranged such that their optical axes lie in a common plane which contains the device normal DN, in the following referred to as the system plane SP. Each directional illumination means 21 comprises a light source such as a white LED and at least one optical component such as one or more lenses to create a collimated or focused beam along the illumination direction.

Two of the three pick-up means 31 to 33 are embodied as spectral measurement channels; and the third pick-up means is embodied as a spatially resolved color measurement channel (imaging channel). The pick-up means receive measurement light reflected from the illuminated measurement area at viewing angles of +15° and +45° in the system plane SP. The two pick-up means 31, 32 that form spectral measurement channels comprise two spectrometers 31a and 32a to which the measurement light is fed by means of lenses and optical fibers 31c and 32c. The pick-up means 33 that forms a spatially resolved measurement channel comprises a color-enabled (RGB) camera 33a to which measurement light is applied via a beam splitter and a lens (not shown). The beam splitter is situated in the pick-up beam path of the pick-up means 32 and directs a part of the measurement light at the viewing angle of +15° laterally out of the arc body 10 onto the camera 33a. The pick-up means 32 and 33 thus share the measurement light and receive it at exactly the same viewing angle.

The measurement geometry is the reverse of ASTM standards E2194 and E2539, in which two illuminations at 15° and 45° and six spectral channels at 0°, 30°, 65°, -20°, -30° and -60° are defined for measurements of metallic and pearlescent effect pigments. One additional illumination means 22 at angle -45° is provided for measuring gloss in combination with the pick-up means 31.

The two spectrometers 31a and 32a spectrally resolve the measurement light fed to them at the viewing angles 45° and 15°, respectively, and respectively produce a set of spectral measurement values per measurement, each measurement value corresponding to intensity in a different wavelength range. The spectrometers 31a, 32a do not spatially resolve the measurement light, i.e., they spectrally resolve the entire measurement light that they receive.

The RGB camera 33a resolves the measurement light fed to it at the viewing angle 15° both spatially and spectrally. Spectral resolution is limited to three channels according to the three colors RGB. The RGB camera correspondingly produces a raw dataset ("raw image") of 3*n measurement values per measurement, wherein n is the number of resolved pixels.

The diffusely illuminating illumination means 28 is provided so that the measurement device also supports a measurement mode with diffuse illumination conditions. The illumination means 28 is configured as an LED background illumination which illuminates the measurement object directly from a large angular range. It comprises two rows of white light-emitting diodes arranged on both sides of the measurement opening 6 and two inclined diffusor films, each assigned to one row, for homogenizing the illumination. The two rows of LEDs can be separately controlled by the control circuitry.

Of course, depending on the envisaged application, other types of illumination means can be employed as well.

The hand-held appearance capture device described above is equipped with seven illumination means and three pick-up means for measuring purposes. It is possible to use other combinations of illumination means and pick-up means. The illumination means need not necessarily be arranged in a plane.

The output of the appearance capture device comprises a set of color attributes. Some of these appearance attributes are color attributes, e.g., in the form of the spectral measurement values determined by the spectrometers or in the form of color values derived therefrom, e.g., RGB, CIELAB or CIEXYZ values. Other appearance attributes may be texture attributes, e.g., in the form of a coarseness value. The appearance capture device may also be able to output, for external use, the raw image data obtained by the RGB camera or processed image data derived therefrom, e.g., in the form of monochromatic greyscale image data.

### Control circuitry

Fig. 3 illustrates a highly schematic functional diagram of the electronic control circuitry 300 in the appearance capture device of Figs. 1 and 2. A processor 310 communicates via a bus system 301 with a non-volatile (ROM) memory 320, a volatile (RAM) memory 330, an input/output (I/O) interface 340, and a communication interface 350. The non-volatile memory 320 may be, e.g., a flash memory device. It stores, inter alia, an operating system 321 and several application programs, including defect detection software 322 and appearance capture software 323. These pieces of software will be explained in more detail below. The non-volatile memory 320 further stores user data, including data that is used or generated by the defect detection software 322 and the appearance capture software 323.

Attached to the input/output interface 340 are the display 4, a motion sensor 8 in the form of an acceleration sensor and/or gyroscope that is integrated into the appearance capture device HMD, and a control member 9 in the form of one or more pushbuttons.

The communication interface 350 may include, e.g., one or more of an Ethernet interface, a WiFi interface, a Bluetooth^{™} interface etc. The communication interface may serve for communication with a remote server computer 360.

The remote server computer 360 may be set up similarly to the control circuitry 300. In some embodiments, the server computer may store for execution second defect detection software, which will be explained in more detail below.

### Defect detection algorithm

The defect detection software 322 stored in the appearance capture device and/or the defect detection software stored in the server computer 360 may cause the respective processor to carry out a defect detection algorithm as described in the following.

The algorithm uses several parameters:
- Patch size: For defect detection, an image that has been acquired by the integrated camera of the appearance capture device is divided into a plurality of equally sized image patches. Advantageously, the patch size approximately corresponds to the length scale of the smallest expected defects. For instance, the image patch may have a size of 16 x 16, 32 x 32 or 64 x 64 pixels. While each patch is advantageously a square patch, having an equal number of pixels along each of its two dimensions, the numbers of pixels along each dimensions may also be different.
- Brightness threshold: If a pixel has a brightness above the brightness threshold, it is considered a defect pixel. The brightness threshold may be a predetermined absolute number; however, advantageously, the brightness threshold is a relative threshold, i.e., a constant factor multiplied with the average brightness in the image. Instead of a brightness threshold, another measure of a deviation of one or more pixel values from an expected pixel value may be used. For instance, an average color of the image in some color space may be computed from the image, and a deviation of pixel color from average color may be computed for each pixel in that color space. For instance, the color space may be CIELAB, and the deviation of pixel color from average color may be ΔE in that color space. A pixel may then be considered a defect pixel if this deviation exceeds a "color deviation threshold". More generally speaking, a determination is made whether a pixel has a pixel value that deviates from a target range of pixel values.
- Neighborhood size: The neighborhood size determines the number of pixels around a defect pixel that is searched for nearby other defect pixels. The neighborhood size may be, e.g., 3 x 3, 5 x 5 or 7 x 7. A neighborhood size of 5 x 5 has delivered particularly good results.
- Defect threshold: The meaning of this parameter will become apparent from the discussion below.

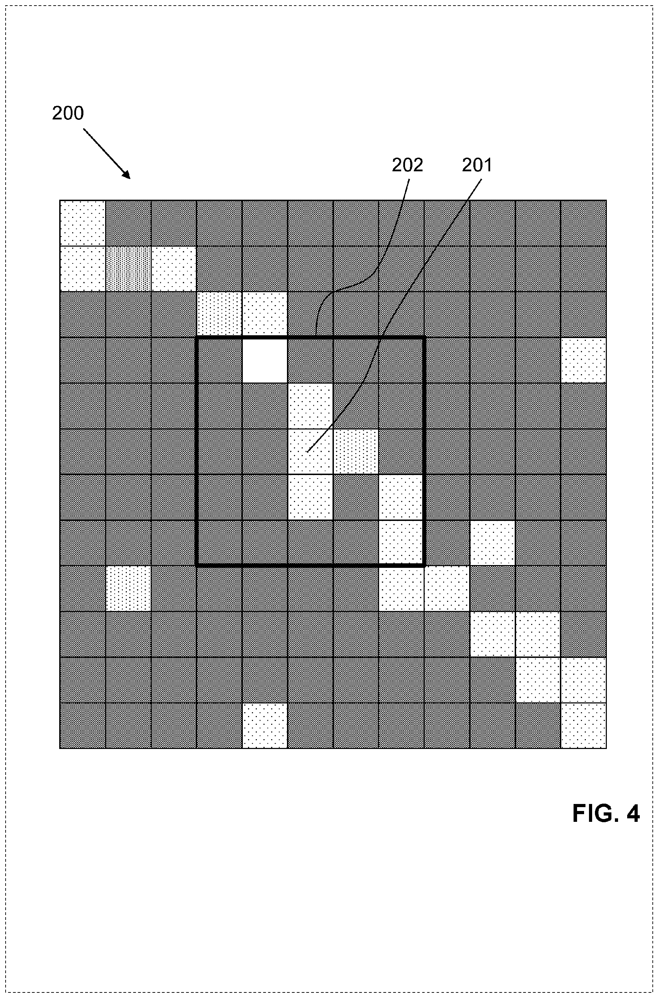

The defect detection algorithm is applied to an image of the measurement area, which has been acquired by the integrated camera, preferably in a near-specular measurement geometry. The image may be a raw image or an image that has been pre-processed, e.g., by transforming a color image into a greyscale image. The defect detection algorithm comprises the following steps:
a) As already mentioned, the image is divided into a plurality of image patches of a predetermined patch size, each image patch comprising an array of pixels. Fig. 4 shows one such image patch 200. In the example of Fig. 4, the patch size is 12 x 12.
b) For each image patch, the following steps (i) to (v) are carried out:
   i) For each pixel in the image patch, the algorithm determines whether the brightness of the pixel exceeds the brightness threshold.
   ii) If the pixel value exceeds the brightness threshold, it is tagged as a defect pixel. For instance, in Fig. 4, pixel 201 is tagged as a defect pixel.
   iii) For each defect pixel in the image patch, a neighborhood around the defect pixel having the predetermined neighborhood size is searched for nearby defect pixels. In the example of Fig. 4, the neighborhood size is 5 x 5 pixels, and a neighborhood 202 of this size around defect pixel 201 is marked by a thick line. The number of defect pixels in the neighborhood of a given defect pixel, excluding the given defect pixel itself, is called the "individual neighborhood count". In the example of Fig. 4, the individual neighborhood count for defect pixel 201 is six.
   iv) The total number of defect pixels in the image patch is determined, and the sum of the individual neighborhood counts of all defect pixels in the image patch is calculated, this sum being called the "total neighborhood count". In the example of Fig. 4, the total number of defect pixels is 24, and the total neighborhood count is approximately 93.
   v) The ratio of the total neighborhood count and the total number of defect pixels is calculated. In the present example, this ratio is approximately 3.9, which is a relatively high number, indicating that most of the defect pixels are located in the immediate neighborhood of several other defect pixels. This correlates with the visual impression of the patch, which contains a large diagonal scratch. On the other hand, if the ratio had been low, this would have indicated that the defect pixels are mostly isolated pixels, for instance, bright pixels that result from reflections from metallic effect pigments in the coating, and are not indicative of actual defects.
   vi) The ratio is compared to the "defect threshold". In the present example, the "defect threshold" was set to 1.0. Since the ratio exceeds this threshold, the image patch is tagged as a defect patch.
c) The total number of defect patches in the image is then determined.
d) If the number of defect patches in the image reaches or exceeds a patch threshold, the defect indicator is set to a logical "True", indicating that the sample surface contains an unacceptable number of defects in the measurement area; otherwise, it is set to a logical "False". The patch threshold may be 1, i.e., as soon as the number of defect patches is 1 or more, the defect indicator may set to "True".

### Operator guidance

If the defect indicator is "True", this indicates that the measurement area that has been selected by the operator is unsuitable for carrying out a measurement of the appearance of the sample surface. Accordingly, the defect detection software may cause the display 4 to show instructions to move the appearance capture device to a different location on the sample surface.

On the other hand, if the defect indicator is "False", the defect detection software may automatically trigger execution of the appearance capture software, causing the appearance capture device to carry out a measurement of the appearance of the sample surface. The appearance capture software activates the illumination means sequentially and acquires spectra and images of the measurement area under the corresponding measurement geometries. The appearance capture software computes appearance attributes based on these measurements. The appearance attributes may comprise color attributes, e.g., color values of the measurement area in a suitable color space for each of the measurement geometries, and appearance attributes, e.g., processed images of the measurement area and/or attributes derived from these images, such as a coarseness attribute that is indicative of the size and density distribution of spatial variations of appearance.

The appearance capture device may comprise a motion sensor 8 in the form of an acceleration sensor and/or gyroscope. The motion sensor may be employed by the defect detection software and the appearance capture software as follows:
- If the operator has been instructed to move the device to a different location, signals from the motion sensor may be used to verify that the device has actually been moved.
- If a measurement of appearance has been triggered, signals of the motion sensor may be used to verify that the device is not moved during execution of the measurement.

In addition or in the alternative, the defect detection software and/or the appearance capture software may compare images taken before and after the instructions to move the device in order to verify that the device has been moved, and/or it may compare images taken before and after the measurement of appearance in order to verify that the device has not been moved.

If one or more defects have been detected, it may still be possible to carry out a measurement of the appearance of the sample surface. In this case, it may be advantageous to correct the measured appearance attributes for the defects. For instance, if bright defects have been detected, the measured color attributes may be corrected to reduce brightness. If texture attributes are determined based on images acquired by the integrated camera, regions of the images where defects are present may be excluded from image analysis to minimize the influence of the defects on the measured texture attributes.

While it is advantageous to carry out the defect detection algorithm in real time during use of the appearance capture device, this might not always be possible. For instance, depending on the algorithm used for defect detection, the algorithm might require simply too much time to be executed in real time. In such cases, it is possible to carry out the defect detection algorithm offline after a measurement of appearance has been carried out in order to decide whether the measured appearance attributes are valid.

It is also possible to split the defect detection algorithm into two parts. A first part is carried out in real time before or during the measurement of appearance. This first part may involve the analysis of only one single image acquired for one selected measurement geometry. A second part is then carried out after the measurement of appearance has been completed. This second part may involve the analysis of images acquired for multiple measurement geometries in order to more reliably detect defects than by analysis of only one single image.

All or part of the defect detection algorithm may be carried out by a processor that is part of the appearance capture device, or it may be carried out by an external computer that is connected to the appearance capture device via a wired or wireless data connection.

### Flow diagram

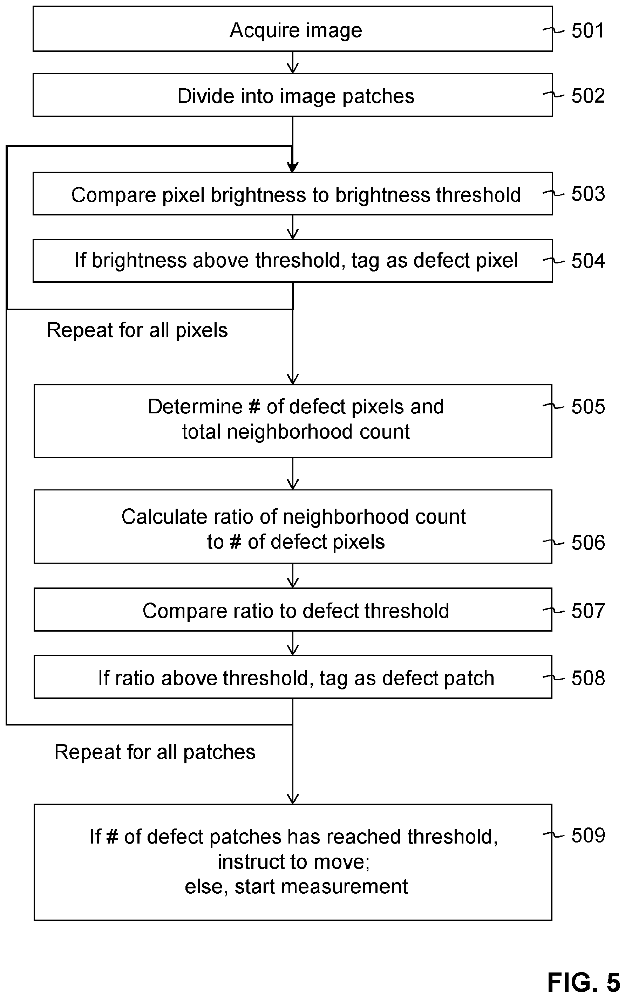

Figure 5 shows a flow diagram of the above-described process. In step 501, an image is acquired and possibly pre-processed. In step 502, the image is divided into image patches. For all pixels in an image patch, brightness is compared to the brightness threshold (step 503), and the pixel is tagged as a defect pixel if its brightness exceeds the brightness threshold (step 504). The number of defect pixels and the total neighborhood count are determined in step 505. In step 506, a ratio of these quantities is formed. In step 507, the ratio is compared to the defect threshold. In step 508, the image patch is tagged as a defect patch if the ratio exceeds the defect threshold. This procedure is repeated over all image patches or until the number of defect patches reaches a certain threshold. If the number of defect patches has reached the threshold, the operator is instructed to move the appearance capture device, and the entire process is restarted; otherwise, a measurement of appearance attributes is initiated in step 509.

### Further modifications

Many further modifications are possible without leaving the scope of the invention as defined in the appended claims.

In particular, a different algorithm than the above-described simple algorithm may be employed for defect detection. The algorithm may employ more advanced mathematical methods like a Hough transform to identify typical shape elements in an image, where these shape elements might be indicative of a defect. In some embodiments, the algorithm may include a machine learning (ML) algorithm, in particular, a supervised ML learning algorithm that has been trained on images that show various degrees of defects. In its simplest form, the ML algorithm may perform a binary classification into two classes: images with defects and images without defects. In more advanced embodiments, the ML algorithm may perform a more complex classification, e.g., classifying images into four classes: images without defects; images with scratches; images with holes; and images with air pockets. Suitable ML algorithms are well known in the art and include convolutional neural networks (CNN), support vector machines (SVM) and others. Many other possibilities for implementing a defect detection algorithm exist.

Accordingly, the defect indicator may be a more complex indicator than just a Boolean value ("True" or "False"). In particular, the defect indicator may be an integer value indicating a class to which the analyzed image belongs, and/or it may include an indication of defect regions in the image. For instance, the defect indicator may be an array of Boolean or integer values, the array indicating which image patches contain at least one defect, and possibly indicating a type or intensity of the defect.

If images for more than one measurement geometry are used for deriving the defect indicator, these images may be analyzed one by one, and the defect indicator may simply be a (possibly weighted) sum of the defect indicators obtained from the analysis of each image individually. In other embodiments, a more complex algorithm may be applied to all images together, e.g., to identify common features that are present in all of the images.

### LIST OF REFERENCE SIGNS

- 1: gripping part
- 3: wrist strap
- 4: display
- 5: housing base
- 6: measurement opening
- 7: base plate
- 7a, 7b, 7c: support member
- 9: control member
- 10: arc body
- 11: sample surface
- 12: measurement area
- 21, 22, 23, 24, 25, 26, 27, 28: illumination means
- 31, 32, 33: pick-up means
- 31a, 32a: spectrometer
- 33a: RGB camera
- 31c, 32c: optical fiber
- 300: control circuitry
- 310: processor
- 320: non-volatile memory
- 321: operating system software
- 322: defect detection software
- 323: appearance capture software
- 330: RAM
- 340: I/O interface
- 350: communication interface
- 360: server computer
- 361: processor
- 501-509: steps
- HMD: hand-held measurement device
- H: housing
- DN: device normal
- SP: system plane

## Claims

1. A method for investigating visual appearance of a sample surface (11) using a spectrophotometer (HMD) having an integrated camera (33a), the method comprising:
acquiring at least one image of a measurement area (12) of the sample surface (11) for at least one measurement geometry, using the integrated camera (33a) of the spectrophotometer (HMD); and
determining a defect indicator that is indicative of defects of the sample surface (11) in the measurement area (12), the step of determining a defect indicator comprising analyzing pixel values of the at least one image, using at least one processor (310; 361).

2. The method of claim 1, wherein the step of determining a defect indicator is carried out by at least one processor (310) in the spectrophotometer (HMD).

3. The method of claim 1 or 2, wherein the step of determining a defect indicator is carried out in real time during use of the spectrophotometer (HMD).

4. The method of claim 3, further comprising generating at least one control instruction that causes the spectrophotometer (HMD) to carry out an action, the control instruction being dependent on the defect indicator.

5. The method claim 3 or 4, comprising:
outputting instructions to an operator to move the spectrophotometer (HMD) to a different location on the sample surface (11) if the defect indicator indicates that the sample surface (11) has unacceptable defects in the measurement area (12).

6. The method of claim 3 or 4, comprising:
detecting whether the spectrophotometer (HMD) has been moved to a different location, based on at least one of the following:
- a comparison of images acquired by the integrated camera (33a) before and after outputting the instructions to the operator; and/or
- signals from at least one motion sensor (8) that is integrated into the spectrophotometer (HMD).

7. The method of any one of claims 3 to 6, comprising:
measuring appearance attributes of the sample surface (11) in the measurement area (12) using the spectrophotometer.

8. The method of claim 7, comprising:
correcting measured appearance attributes for defects if the defect indicator indicates that the sample surface (11) has defects in the measurement area (12),
wherein the spectrophotometer comprises at least one spectrally resolving detector for obtaining spectral information from the measurement area (12), and
wherein correcting the measured appearance attributes for defects comprises correcting the obtained spectral information.

9. The method of claim 7 or 8, comprising:
detecting whether the spectrophotometer (HMD) has been moved after the image of the measurement area (12) was acquired, based on signals from at least one motion sensor (8) that is integrated into the spectrophotometer (HMD), to ensure that the measurement of the appearance attributes is carried out for the same measurement area (12) for which the defect detection was carried out.

10. The method of any one of the preceding claims, comprising obtaining multiple images of the measurement area (12) for a plurality of measurement geometries,
wherein the step of determining a defect indicator comprises analyzing pixel values of said multiple images.

11. The method of claim 10,
wherein the step of determining a defect indicator comprises a pre-measurement portion and a post-measurement portion,
wherein the pre-measurement portion comprises analyzing pixel values of at least one image of the measurement area (12) for a first number of measurement geometries to derive a pre-measurement defect indicator,
wherein the pre-measurement portion is carried out in real time before a measurement of visual appearance of the sample surface (11) in the measurement area (12) has been completed,
wherein the pre-measurement defect indicator is used for controlling operation of the spectrophotometer (HMD); and
wherein the post-measurement portion comprises analyzing pixel values of a plurality of images of the measurement area (12) for a second number of measurement geometries to derive a post-measurement defect indicator,
wherein the post-measurement portion is carried out subsequently to the pre-measurement portion, and
wherein the second number of measurement geometries is larger than the first number of measurement geometries.

12. The method of claim 11,
wherein the pre-measurement portion is carried out by a processor (310) in the spectrophotometer (HMD); and
wherein at least a portion of the post-measurement portion is carried out by a computer (360) that is separate from the spectrophotometer (HMD).

13. The method of any one of the preceding claims, wherein the step of determining a defect indicator comprises the following substeps a)-c):
a) dividing the image into a plurality of image patches (200), each image patch comprising an array of pixels;
b) for each image patch (200), determining whether the image patch is a defect patch that comprises a defect, preferably by carrying out the following substeps (i) to (vi):
i) for each pixel in the image patch (200), determining whether the pixel has a pixel value that deviates from a target range of pixel values;
ii) if the pixel value is outside the target range, tagging the pixel as a defect pixel;
iii) for each given defect pixel (201) in the image patch (200), determining an individual neighborhood count, the individual neighborhood count indicating a number of neighboring defect pixels in a neighborhood (202) of the given defect pixel (201);
iv) determining a total number of defect pixels in the image patch (200) and a total neighborhood count, the total neighborhood count being the sum of the individual neighborhood counts of all defect pixels in the image patch (200);
v) calculating a ratio of the total neighborhood count and the total number of defect pixels;
vi) if the ratio exceeds a defect threshold, tagging the image patch (200) as a defect patch;
c) deriving the defect indicator based on a number of defect patches in the image.

14. The method of claim 13, wherein the pixel value is a brightness value indicative of a brightness of the pixel.

15. A multi-angle spectrophotometer (HMD), comprising:
one or more light sources (21-28) for illuminating a measurement area (12) of a sample surface (11);
a camera (33a) configured to obtain images of the measurement area (12), the camera (33a) preferably being arranged in a specular or near-specular arrangement relative to one of the light sources (21-28);
at least one spectrally resolving detector (31a, 32a) for obtaining spectral information from the measurement area (12);
at least one processor (310); and
a memory (320) storing computer-readable instructions (322, 323) to cause the processor to carry out the method of any one of the preceding claims.
